# EUROPÄISCHE PATENTSCHRIFT

(11) **EP 0 832 021 B1**
(45) Veröffentlichungstag und Bekanntmachung des Hinweises auf die Patenterteilung: **16.12.1998**
(21) Anmeldenummer: 96907313.9
(22) Anmeldetag: 30.03.1996
(51) Int. Cl.: B60T 17/00

(54) **VORRICHTUNG ZUM ZEITABHÄNGIGEN STEUERN DER REGENERATIONSDAUER EINES LUFTTROCKNERS**
DEVICE FOR THE TIME-DEPENDENT CONTROL OF THE DURATION OF REGENERATION OF AN AIR DRIER
DISPOSITIF DE COMMANDE EN FONCTION DU TEMPS DE LA DUREE DE REGENERATION D'UN DESHUMIDIFICATEUR D'AIR

(30) Priorität: 27.06.1995 DE 19523219
(43) Veröffentlichungstag der Anmeldung: 01.04.1998
(73) Patentinhaber: ROBERT BOSCH GMBH, 70442 Stuttgart (DE)
(72) Erfinder: WOLZ, Dieter, D-71672 Marbach (DE); SCHNÄKER, Alois, D-70794 Filderstadt (DE); KARTHÄUSER, Klaus, D-70469 Stuttgart (DE); WELLER, Rolf, D-73655 Pluderhausen (DE); LEOPOLD, Rüdiger, D-71263 Weil der Stadt (DE); HEIZMANN, Klaus, D-71229 Leonberg (DE)
(86) Internationale Anmeldenummer: DE9600561
(87) Internationale Veröffentlichungsnummer: WO9701473

(56) Entgegenhaltungen:
- EP-A- 0 405 073
- EP-A- 0 492 711
- EP-A- 0 497 570

## Beschreibung

### Stand der Technik

Die Erfindung geht aus von einer Vorrichtung zum zeitabhängigen Steuern der Regenerationsdauer eines Lufttrockners nach der Gattung des Patentanspruchs 1.

Es ist schon eine solche Vorrichtung bekannt (EP 0 036 569 A1), bei welcher ein mit dem Absperrventil verbundener, federbelasteter Kolben in einem Zylinder differenzdruckbetätigt zwischen zwei Zylinderräumen verschiebbar ist. Die beiden Zylinderräume kommunizieren durch Drosselbohrungen unterschiedlichen Querschnitts miteinander sowie mit dem Lufttrocknerinnenraum. Die in ihnen enthaltene Druckluft wird neben der aus einem Vorratsluftbehälter entnommenen Luft mit zur Regeneration des Lufttrockners herangezogen. Die bekannte Vorrichtung nimmt verhältnismäßig viel Einbauraum in Anspruch. Außerdem ist die Herstellung der Drosselbohrungen im Gehäuse des Lufttrockners schwierig. Darüber hinaus ist die Dauer der Regenerationsphase abhängig von verbrauchsbedingten Druckschwankungen in der Druckluftanlage sowie von fertigungsbedingten Abweichungen der Drosselbohrungen.

### Vorteile der Erfindung

Die erfindungsgemäße Vorrichtung mit dem kennzeichnenden Merkmal des Patentanspruchs 1 ist demgegenüber insofern vorteilhaft, als die Wirkung der Drosselstelle mit sehr engen Toleranzen einstellbar ist. Dies kann durch Einflußnahme auf die Struktur der Membrane, d. h. auf den mittleren Porendurchmesser, auf das Porenvolumen, auf die wirksame Membranfläche und der Dicke der Membrane geschehen. Reproduzierbare Druckverhältnisse der die Membrane durchdringenden Luft vorausgesetzt kann somit eine sehr genaue zeitabhängige Steuerung der Regenerationsdauer erzielt werden. Die Regeneration des Lufttrockners ist daher ohne unnötigen Druckluftverbrauch steuerbar.

Durch die in den Unteransprüchen aufgeführten Maßnahmen sind vorteilhafte Weiterbildungen und Verbesserungen der im Patentanspruch 1 angegebenen Vorrichtung möglich.

Aufgrund der im Anspruch 2 angegebenen Werkstoffwahl ist ein gleichbleibendes Verhalten der Membrane über die Lebensdauer des Lufttrockners zu erwarten, weil der Werkstoff weitgehend resistent sowie schmutzabweisend ist.

Mit der im Anspruch 6 gekennzeichneten Weiterbildung der Erfindung ist auf einfache Weise sowohl die Einleitung von Luft in den Hohlraum erreicht als auch die Abdichtung des Kolbens gegen den Hohlraum erzielt, wenn aus diesem die Luft auf dem Weg durch die Membrane verdrängt wird.

Die im Anspruch 7 angegebene Ausgestaltung der Erfindung stellt eine raumsparende, fertigungs- und montagegünstige Lösung für eine Vereinigung der Elemente der Regenerationsdauer-Steuervorrichtung dar, welche die Verzögerungsvorrichtung, das Absperrventil sowie das Betätigungsmittel umfaßt.

Weitere Vorteile ergeben sich aus der Beschreibung der erfindungsgemäßen Vorrichtung.

### Zeichnung

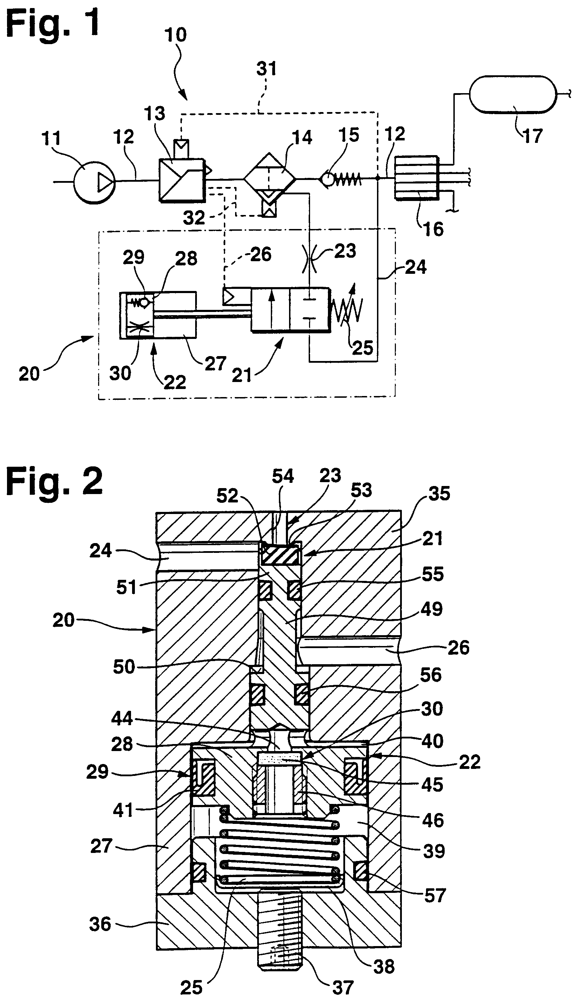

Ein Ausführungsbeispiel der Erfindung ist in der Zeichnung vereinfacht dargestellt und in der nachfolgenden Beschreibung näher erläutert. Es zeigen Figur 1 ein Schaltschema einer zum Teil dargestellten Druckluftanlage mit einem Lufttrockner und Figur 2 einen Schnitt einer Vorrichtung für die Steuerung der Regenerationsdauer des Lufttrockners.

### Beschreibung des Ausführungsbeispiels

Das in Figur 1 gezeigte Schaltschema zeigt eine Druckluftanlage 10, und zwar die Energieversorgung sowie zum Teil die Übertragungseinrichtung einer Bremsanlage für Nutzfahrzeuge. Die Druckluftanlage 10 hat einen Luftkompressor 11, von dem eine Förderleitung 12 mit einem Druckregler 13, einem Lufttrockner 14, einem Rückschlagventil 15 und einem Schutzventil 16 jeweils in Förderrichtung aufeinanderfolgend ausgeht. An das Schutzventil 16 ist ein Vorratsbehälter 17 für Druckluft eines im übrigen nicht dargestellten Verbraucherkreises angeschlossen. Auf die Darstellung weiterer Verbraucherkreise der Druckluftanlage 10 ist verzichtet.

Der Lufttrockner 14 ist ein sogenannter Einkammer-Lufttrockner. Er enthält ein Trocknungsmittel, mit dem vom Luftkompressor 11 geförderte, feuchtigkeitsbeladene Druckluft von der Verteilung an die Verbraucherkreise entfeuchtet wird. Das Trocknungsmittel nimmt die Feuchtigkeit bis zur Erschöpfung seiner Trocknungskapazität auf; der Lufttrockner 14 bedarf daher der Regenerierung seines Trocknungsmittels. Zu diesem Zweck ist eine Vorrichtung 20 zum zeitabhängigen Steuern der Regenerationsdauer des Einkammer-Lufttrockners 14 vorgesehen. Zur Regenerationsdauer-Steuervorrichtung 20 gehören ein Absperrventil 21, eine pneumatische Verzögerungsvorrichtung 22 sowie eine Drossel 23. Das Absperrventil 21 liegt in Reihe zu der Drossel 23 in einer Spülleitung 24, welche zwischen dem Rückschlagventil 15 und dem Schutzventil 16 von der Förderleitung 12 ausgeht und in den Lufttrockner 14 mündet. Das Absperrventil 21 ist ein 2/2-Wegeventil mit einer Sperrstellung als Grundstellung. Es ist pneumatisch entgegen der Kraft einer einstellbaren Rückstellfeder 25 in seine Durchlaßstellung schaltbar. Hierzu ist das Absperrventil 21 mit einer Steuerleitung 26 an den Druckregler 13 angeschlossen. Die mit dem Absperrventil 21 wirkungsmäßig verbundene Verzögerungsvorrichtung 22 ist als Zylinder 27 mit einem Kolben 28 dargestellt, in dem ein beide Zylinderräume verbindendes Rückschlagventil 29 sowie eine Drosselstelle 30 aufgenommen sind. Ferner sind im Schaltschema nach Figur 1 noch zwei Steuerleitungen 31 und 32 eingezeichnet. Die Steuerleitung 31 geht von der Förderleitung 12 zwischen dem Rückschlagventil 15 und dem Schutzventil 16 aus und führt zu einem Steuereingang des Druckreglers 13. Die Steuerleitung 32 geht dagegen von einem Steuerausgang des Druckreglers 13 aus und führt zu einem Steuereingang des Lufttrockners 14, um diesen in den Regenerationsbetrieb umzuschalten.

Die Regenerationsdauer-Steuervorrichtung 20 hat folgende Wirkungsweise:

Die vom Luftkompressor 11 geförderte Druckluft wird, wie bereits erwähnt, durch die Förderleitung 12 zum Schutzventil 16 geleitet und an die Verbraucherkreise verteilt. Beim Erreichen eines oberen Grenzdrucks im verbraucherseitigen Teil der Druckluftanlage 10 wird der Druckregler 13 über die Steuerleitung 31 umgeschaltet. Der Luftkompressor 11 geht nun in den Leerlaufbetrieb über. Mit dem Umschalten des Druckreglers 13 oder bereits während des Förderbetriebs des Luftkompressors 11 wird über die Steuerleitung 26 das Absperrventil 21 entgegen der Kraft der Rückstellfeder 25 in seine Durchlaßstellung geschaltet. Zugleich wird der Kolben 28 der Verzögerungsvorrichtung 22 im Zylinder 27 verschoben. Dabei gelangt Luft durch das Rückschlagventil 29 von der einen Seite des Kolbens 28 auf dessen andere Seite. Mit dem Umschalten des Druckreglers 13 wird außerdem über die Steuerleitung 32 der Lufttrockner 14 in den Regenerationsbetrieb geschaltet. Dem Luftbehälter 17 entnommene, trockene Druckluft gelangt nun durch die Spülleitung 24 zur Drossel 23, wo die Druckluft entspannt und zum Lufttrockner 14 abgegeben wird. Die trockene Luft wird im Gegenstromverfahren durch den Lufttrockner 14 hindurch geleitet und zur Atmosphäre abgegeben. Dabei nimmt die Luft im Trocknungsmittel des Lufttrockners 14 eingelagertes Wasser auf, so daß der Lufttrockner hierdurch regeneriert wird, d. h. seine Fähigkeit, geförderter Druckluft die Feuchtigkeit zu entziehen, wieder erhält.

Während der Dauer des Regenerationsvorganges ist die Rückstellfeder 25 bestrebt, das Absperrventil 21 in seine Grundstellung zurückzuführen. Dem setzt die Drosselstelle 30 im Kolben 28 der Verzögerungsvorrichtung 22 einen Widerstand entgegen, indem sie die Rückströmung der Luft von der einen zur anderen Seite des Kolbens 28 verzögert. Nach einer durch entsprechende Gestaltung der Drosselstelle vorgewählten Zeitdauer schaltet das Absperrventil 21 in seine Sperrstellung um: Die Regenerationsphase des Lufttrockners 14 ist damit abgeschlossen. Die Regenerationsdauer ist so eingestellt, daß ein unnötiger Druckluftverbrauch aus dem Luftbehälter 17 vermieden und eine vollständige Regeneration des Lufttrockners 14 erzielt wird. Beim verbrauchsbedingten Absinken des Luftdrucks in den Verbraucherkreisen der Druckluftanlage 10 auf einen unteren Grenzwert werden der Druckregler 13 in die Stellung Füllen und der Lufttrocker 14 in die Arbeitsweise Entfeuchten umgeschaltet. Die vom Luftkompressor 11 geförderte Druckluft wird, wie eingangs beschrieben, vom regenerierten Lufttrockner 14 entfeuchtet und in die Verbraucherkreise abgegeben.

Das in Figur 2 dargestellte Ausführungsbeispiel der Regenerationsdauer-Steuervorrichtung 20 umfaßt ein Gehäuse 35, in dem die Drossel 23, das Absperrventil 21 und die Verzögerungsvorrichtung 22 vereinigt sind. Die Regenerationsdauer-Steuervorrichtung 20 kann in den Einkammer-Lufttrockner 14 eingefügt sein.

Der im Gehäuse 35 ausgebildete Zylinder 27 der Verzögerungsvorrichtung 22 ist durch einen Zylinderdeckel 36 abgeschlossen. Achsgleich zum im Zylinder 27 längsbewegbar aufgenommenen Kolben 28 ist der Zylinderdeckel 36 von einer Einstellschraube 37 durchdrungen, auf der innerhalb des Zylinders ein Federteller 38 abgestützt ist. Auf diesem sitzt die als Schraubendruckfeder ausgebildete Rückstellfeder 25 des Absperrventils 21. Die Feder 25 greift am Kolben 28 an, der einen die Feder enthaltenden Federraum 39 von einem oberhalb des Kolbens gelegenen Hohlraum 40 des Zylinders 27 trennt. Die Vorspannung der Feder 25 ist mittels der Einstellschraube 37 veränderbar.

Am Kolben 28 ist zur Abdichtung gegen den Zylinder 27 ein Wellendichtring 41 aufgenommen. Dieser wirkt als das im Schaltschema nach Figur 1 angegebene Rückschlagventil 29: Bei einem Abwärtshub des Kolbens 28 vermag unter Atmosphärendruck stehende Luft aus dem Federraum 39 in den Hohlraum 40 auf der anderen Zylinderseite zu gelangen; in der umgekehrten Richtung ist dagegen dieser Weg durch den Wellendichtring 41 versperrt. Der eine verschiebbare Wand darstellende Kolben 28 ist auf diese Weise vom Rückschlagventil 29 mit Durchlaßrichtung in den Hohlraum 28 umgangen.

Der Kolben 28 besitzt eine von einer axial sowie einer quer verlaufenden Bohrung gebildete Durchgangsbohrung 44, welche den Federraum 39 mit dem Hohlraum 40 verbindet. In der Durchgangsbohrung 44 ist eine Scheibe 45 aus porösem Polytetrafluorethylen aufgenommen, welche als für Luft permeable Membrane wirkt. Ein derartiger Werkstoff wird von der Fa. Berghof Labor- und Automationstechnik GmbH, D-72800 Eningen, angeboten. Die Membrane stellt die im Schaltschema nach Figur 1 dargestellte Drosselstelle 30 der Verzögerungsvorrichtung 22 dar. Die Scheibe 45 ist durch eine Hülsenschraube 46 in der Durchgangsbohrung 44 eingespannt. Im Hohlraum 40 befindliche Luft vermag den Weg nur durch die Scheibe 45 in den Federraum 39 zu nehmen. Den Widerstand, den die Scheibe 45 der Luft entgegensetzt, bestimmen der mittlere Porendurchmesser, das Porenvolumen, die wirksame Fläche sowie die Dicke der Scheibe 45.

Auf der federabgewandten Seite ist der Kolben 28 mit einer abgestuften Kolbenstange 49 versehen. Nach einer den Querschnitt verringernden Stufenfläche 50 ist die Kolbenstange 49 mit einem Endabschnitt 51 fortgeführt, welcher an seinem freien Ende ein Schließglied 52 des Absperrventils 21 trägt. Das Schließglied 52 ist in der gezeichneten Grundstellung des Absperrventils 21 an einem gehäuseseitigen Ventilsitz 53 abgestützt. Schließgliedseitig mündet in das Gehäuse 35 ein Abschnitt der Spülleitung 24; ventilsitzseitig befindet sich im Gehäuse 35 eine Bohrung 54, welche gemäß dem Schaltschema nach Figur 1 die Drossel 23 im zum Lufttrockner 14 führenden Teil der Spülleitung 24 bildet. In das Gehäuse 35 mündet außerdem ein mit der Stufenfläche 50 in Verbindung stehender Abschnitt der vom Druckregler 13 herangeführten Steuerleitung 26. Die Kolbenstange 49 ist zwischen dem Abschnitt der Spülleitung 24 und dem Abschnitt der Steuerleitung 26 durch einen Dichtungsring 55 gegenüber dem Gehäuse 35 abgedichtet. Ein zweiter Dichtungsring 56 trennt den Abschnitt der Steuerleitung 26 vom Hohlraum 40; ein dritter Dichtungsring 57 zwischen dem Zylinderdeckel 36 und dem Zylinder 27 verhindert das Eindringen von Verschmutzung in den Federraum 39, während ein vierter Dichtungsring zwischen der Einstellschraube 37 und dem Zylinderdeckel zum gleichen Zweck angeordnet sein kann.

Die Regenerationsdauer-Steuervorrichtung 20 ist in folgender Weise zur Wirksamkeit zu bringen:

Durch die Einsteuerung von Steuerdruck in die Steuerleitung 26 wird auf die Stufenfläche 50 der Kolbenstange 49 eine Kraft ausgeübt, welche den Kolben 28 mit Kolbenstange 49 entgegen der Kraft der Feder 25 bis zum Anschlag gegen den Zylinderdeckel 36 axial verschiebt. Dabei wird die im Federraum 39 befindliche Luft verdrängt und gelangt unter Überwindung des Wellendichtringes 41 in den durch die Kolbenbewegung vergrößerten Hohlraum 40. Mit dem Verschieben des Kolbens 28 wird zugleich das Absperrventil 21 von der Sperrstellung in die Durchlaßstellung geschaltet. Mit Wegfall des Steuerdrucks an der Stufenfläche 50 beginnt die Rückstellbewegung des Kolbens 28. Die von der Feder 25 auf den Kolben 28 ausgeübte Rückstellkraft bewirkt eine Kompression der im Hohlraum 40 eingeschlossenen Luft, welche lediglich durch die Durchgangsbohrung 44 in den drucklosen Federraum 39 zu gelangen vermag. Dem setzt die drosselnde Wirkung der Polytetrafluorethylen-Scheibe 45 einen Widerstand entgegen, d. h., der Kolben 28 erreicht erst nach einer gewissen Zeit seine Ausgangsstellung, in der er das Absperrventil 21 schließt. Diese die Regenerationsdauer bestimmende Zeitdauer ist neben der Ausbildung der Scheibe 45 auch durch die Einstellung der Vorspannung der Feder 25 mittels der axial verstellbaren Einstellschraube 37 beeinflußbar. Darüber hinaus kann auch das Volumen des Hohlraums 40 zur Veränderung der Regenerationsdauer-Einstellung herangezogen werden.

## Patentansprüche

1. Vorrichtung (20) zum zeitabhängigen Steuern der Regenerationsdauer eines Lufttrockners (14), insbesondere für Druckluftanlagen (10) von Kraftfahrzeugen, mit einem zwischen einem Druckluft enthaltenden Behälter (17) und dem Lufttrockner (14) in einer Leitung (24) angeordneten Absperrventil (21), welches für die Regeneration des Lufttrockners (14) von einem Steuerdruck in seine Durchlaßstellung schaltbar und mit Federkraft gegen eine pneumatische Verzögerungsvorrichtung (22) in seine die Regeneration beendende Sperrstellung zurückführbar ist, wobei in der pneumatischen Verzögerungsvorrichtung (22) Luft durch eine Drosselstelle (30) verschoben wird,
dadurch gekennzeichnet,
daß die Drosselstelle (30) von einer permeablen Membrane oder Scheibe (45) gebildet ist.

2. Vorrichtung nach Anspruch 1, dadurch gekennzeichnet, daß die Membrane oder Scheibe (45) aus porösem Polytetrafluorethylen (PTFE) besteht.

3. Vorrichtung nach Anspruch 1, dadurch gekennzeichnet, daß die Membrane oder Scheibe (45) in einer Durchgangsbohrung (44) einer verschiebbaren Wand (28) der Verzögerungsvorrichtung (22) angeordnet ist, welche Wand (28) auf ihrer einen Seite einen Hohlraum (40) begrenzt und auf ihrer anderen Seite unter der Wirkung einer Druckfeder (25) steht.

4. Vorrichtung nach Anspruch 3, dadurch gekennzeichnet, daß die verschiebbare Wand (28) von dem Steuerdruck entgegen der Kraft der Druckfeder (25) in eine den Hohlraum (40) vergrößernde Stellung bewegbar ist.

5. Vorrichtung nach Anspruch 4, dadurch gekennzeichnet, daß die verschiebbare Wand (28) von einem Rückschlagventil (29) mit Durchlaßrichtung in den Hohlraum (40) umgangen ist.

6. Vorrichtung nach Anspruch 5, dadurch gekennzeichnet, daß die verschiebbare Wand als Kolben (28) in einem Zylinder (27) ausgebildet ist und einen als Rückschlagventil (29) wirkenden Wellendichtring (41) trägt.

7. Vorrichtung nach Anspruch 6, dadurch gekennzeichnet, daß der Kolben (28) eine abgestufte Kolbenstange (49) hat, deren federabgewandter Endabschnitt (51) ein Schließglied (52) des Absperrventils (21) trägt, während eine Stufenfläche (50) der Kolbenstange (49) eine Wirkfläche für den Steuerdruck bildet.

8. Vorrichtung nach Anspruch 7, dadurch gekennzeichnet, daß die Druckfeder (25) mit ihrer kolbenfernen Stirnseite auf einem Federteller (38) sitzt, der axial verstellbar ist.

## Claims

1. Device (20) for the time-dependent control of the duration of regeneration of an air dryer (14), in particular for compressed-air systems (10) of motor vehicles, having a shut-off valve (21), which is arranged in a line (24) between a container (17) containing compressed air and the air dryer (14), can be switched by a control pressure into its passage position for the regeneration of the air dryer (14) and can be guided back by spring force, counter to a pneumatic delay device (22), into its shut-off position, terminating the regeneration, it being the case that, in the pneumatic delay device (22), air is displaced through a throttling point (30), characterized in that the throttling point (30) is formed by a permeable membrane or disc (45).

2. Device according to Claim 1, characterized in that the membrane or disc (45) consists of porous polytetrafluoroethylene (PTFE).

3. Device according to Claim 1, characterized in that the membrane or disc (45) is arranged in a passage hole (44) in a displaceable wall (28) of the delay device (22), this wall (28) bounding a cavity (40) on its one side and being subject to the action of a compression spring (25) on its other side.

4. Device according to Claim 3, characterized in that the displaceable wall (28) can be moved by the control pressure, counter to the force of the compression spring (25), into a position that enlarges the cavity (40).

5. Device according to Claim 4, characterized in that the displaceable wall (28) is bypassed by a non-return valve (29) having a passage direction into the cavity (40).

6. Device according to Claim 5, characterized in that the displaceable wall is constructed as a piston (28) in a cylinder (27) and bears a shaft sealing ring (41) that acts as a non-return valve (29).

7. Device according to Claim 6, characterized in that the piston (28) has a stepped piston rod (49), whose end section (51) facing away from the spring bears a closing element (52) of the shut-off valve (21), while a step face (50) of the piston rod (49) forms an action face for the control pressure.

8. Device according to Claim 7, characterized in that the compression spring (25) is seated, with its end remote from the piston, on a spring plate (38), which is axially adjustable.

## Revendications

1. Dispositif de commande (20) en fonction du temps de la durée de régénération d'un déshumidificateur d'air (14), en particulier pour des installations à air comprimé (10) montées sur des véhicules automobiles, dans lequel une canalisation (24) reliant un récipient (17) rempli d'air comprimé et le déshumidificateur (14) contient une soupape d'arrêt (21) qui, pour produire la régénération de déshumidificateur (14) peut être amenée par l'action d'une pression de commande en position de passage et être ramenée en position d'arrêt mettant fin à la régénération par l'action d'un ressort s'opposant à un dispositif pneumatique de ralentissement (22) à l'intérieur duquel de l'air se déplace à travers un organe d'étranglement (30),
caractérisé en ce que
l'organe d'étranglement est constitué par une membrane ou un disque perméable (45).

2. Dispositif selon la revendication 1,
caractérisé en ce que
la membrane ou le disque (45) est en polytétrafluoréthylène (PTFE).

3. Dispositif selon la revendication 1,
caractérisé en ce que
la membrane ou le disque (45) est montée dans un alésage de passage (44) traversant une paroi mobile (28) du dispositif de ralentissement (22), cette paroi délimitant d'un côté une chambre (40) et, de l'autre côté, étant soumise à l'action d'un ressort (25).

4. Dispositif selon la revendication 1,
caractérisé en ce que
la paroi mobile (28) peut se déplacer sous l'action de la pression de commande s'opposant à la force du ressort de poussée (25), pour venir occuper une position augmentant le volume de la chambre (40).

5. Dispositif selon la revendication 4,
caractérisé en ce que
la paroi mobile (28) peut être contournée par une soupape antiretour (29) s'ouvrant en direction de la chambre (40).

6. Dispositif selon la revendication 5,
caractérisé en ce que
la paroi mobile est constituée par un piston (28) logé dans un cylindre (27) et portant une bague d'étanchéité à lèvre (41) jouant le rôle de soupape antiretour (29).

7. Dispositif selon la revendication 6,
caractérisé en ce que
le piston (28) a une tige (49) étagée, dont l'extrémité (51) éloignée du ressort porte un organe de fermeture (52) de la soupape d'arrêt (21), tandis qu'une portée en gradin (50) de la tige (49) constitue la surface d'application de la pression de commande.

8. Dispositif selon la revendication 7,
caractérisé en ce que
le ressort de poussée (25) par sa face frontale éloignée du piston, est en appui sur une coupelle (38) qui peut être déplacée axialement.
